# EUROPEAN PATENT APPLICATION

(11) **EP 2 368 924 A1**
(43) Date of publication of application: **28.09.2011**
(21) Application number: 10157234.5
(22) Date of filing: 22.03.2010
(51) Int. Cl.: C08F 251/00, C08F 251/02, C08L 51/02, D21H 21/20

(54) **Composition for improving dry strength**

(71) Applicant: Kemira Germany GmbH, 51377 Leverkusen (DE)
(72) Inventor: Hauschel, Bernd, 51467, Gladbach (DE)
(74) Representative: Milanov, Nina Vendela Maria

(57) **Abstract**

The present invention relates to aqueous compositions for increasing dry strength in paper, wherein the composition comprises cationic starch graft polymers and aluminium containing compounds. Said compositions may be added to paper stock suspensions prior to the sheet formation or applied to the surface of the paper web in order to increase the dry strength of the produced paper.

## Description

### Field of the invention

The present invention relates to an aqueous composition for increasing dry strength in paper, said composition comprising a cationic starch graft polymer and an aluminium containing compound, its use as a dry strength agent and the process for the preparation of said composition. The present invention also relates to a method of imparting dry strength to paper and paper treated with said composition.

### Background of the invention

When talking generally about paper dry strength, several strength parameters are encompassed, like dry tensile strength, burst strength, internal bond strength or strength in the paper z-direction, stiffness, folding resistance, surface strength and compression resistance (cf. "Dry Strength Additives", Ed. W. F. Reynolds, TAPPI Press 1980, Atlanta). Paper dry strength can be improved by the suitable selection of the fiber raw material, or by the fiber pre-treatment, e.g dry tensile and burst strength by enhanced beating. Paper dry strength can be furthermore improved by using certain additives during papermaking, either prior to the sheet formation (wet end addition), or by paper surface treatment. Dry strength additives improve the bonding between the cellulose fibers in the sheet by increasing the contact areas between fibers, and by strengthening the fibrils which are forming interfiber links. For this purpose, polymeric, hydrophilic additives are particularly suitable. Typical examples for dry strength enhancing polymers are starch, polyacrylamides, galactomannanes, carboxymethylcellulose, polyvinylamine and polyvinylalcohol.

Dry strength―enhancing paper additives can principally be added prior to the sheet formation, that means in the paper machine wet end, or they can be applied to the surface of the paper web after pre-drying of the paper web.

EP 194 987 describes cationic starch graft polymers as paper dry strength agents, whereby starch is used as grafting base and the grafts consist of cationic polyacrylamide. The monomers used to build up these grafts are acrylamide and a cationic vinyl monomer. The resulting products are self-retentive when applied during papermaking in the wet end, so no fixatives are needed.

EP 1 452 552 describes cationic starch graft polymers with starch as grafting base and grafts consisting of crosslinked cationic polyacrylamide. In this case, at least one bi- or higher functional monomer is used during the polymerization process of the cationic polyacrylamide, leading to branching and crosslinking of the polyacrylamide and thus resulting in improved dry strengthening properties.

There is, however, an ongoing need for furthermore improved dry strength agents in the paper industry. More efficient dry strength resins will allow the papermaker to use lower quality fibers, a higher proportion of recycled fibers or a higher proportion of mineral fillers, especially ground calcium carbonate (GCC), precipitated calcium carbonate (PCC) and clay. Those mineral fillers are less expensive than papermaking fibers.

Thus, it would be very desirable to find products and processes that increase the dry strength in paper making further.

### Summary of the invention

It has now been surprisingly found, that polymer compositions comprising aluminium containing compounds according to the present invention show even further improved dry strengthening performance compared to known dry strengthening compositions. Compositions according to the present invention where addition of an aluminium containing compound before, during and/or after the polymerisation of starch graft polymers may be used to considerably increase the dry strength of paper.

The present invention relates to an aqueous composition for increasing dry strength in paper making characterized in that said composition comprises:
I) 5-25 % by weight of the composition of polymeric substances composed of a grafting base a):
   a) 15-70 % by weight of the polymeric substances of a starch and/or a starch derivative; and
      monomers b) to e):
   b) 14-83 % by weight of the polymeric substances of acrylamide, methacrylamide or mixtures thereof
   c) 1-26 % by weight of the polymeric substances of at least one cationic or basic monofunctional vinyl monomer,
   d) 0-4 % by weight of the polymeric substances of at least one bi- or higher functional vinyl monomer,
   e) 0-13 % by weight of the polymeric substances of at least one nonionic, non-protonable or anionic monofunctional vinyl monomer, which differs from the monomers mentioned under c),
   whereas the sum of a) to e) is 100 % by weight of the polymeric substances;
   and
II) an aluminium content of 0.1-3% by weight of the composition from at least one water soluble aluminium containing compound.

In one embodiment of the present invention said aluminium containing compounds are aluminium salts and/or polyaluminium salts; preferably chosen from aluminium sulphate, potassium aluminium sulphate, aluminates, aluminium nitrate, polyaluminium chloride and polyaluminium sulphate or any combination thereof.

In another embodiment of the present invention said starches have been pretreated by a molecular-weight reducing step and/or have been derivatized; preferably chosen from hydroxyethylated starches, cationic starches, and cationic starches which have been reduced in their molecular weight through an oxidative treatment.

In yet another embodiment of the present invention said monomer under b) is acrylamide.

In another embodiment of the present invention said monomer under c) is chosen from the group consisiting of N,N-dialkylaminoalkylacrylates or the respective methacrylates, or N,N-dialkylaminoalkylacrylamides or the respective methacrylamides, as well as the quaternization products of all these compounds, or any combination thereof.

In still another embodiment of the present invention said monomer under d) is chosen from the group consisiting of N,N'-methylene-bisacrylamide, ethyleneglycoldiacrylate and ethylenglycoldimethacrylate, or any combination thereof.

In another embodiment of the present invention, if said monomer under e) is:
- a nonionic monomer, it is chosen from the group consisiting of styrene, acrylic esters, methacrylic esters, acrylonitrile, methacrylonitrile, N,N-dimethylacrylamide, vinyl acetate, vinyl propionate, N-vinylformamide, hydroxyethylacrylate and hydroxyethylmethacrylate, as well as esters obtained from acrylic acid or methacrylic acid and at least two equivalents ethylene oxide or any combination thereof; or
- an anionic monomer, it is chosen from the group consisting of acrylic acid, methacrylic acid, itaconic acid, maleic anhydride, vinylsulfonic acid and styrenesulfonic acid or any combination thereof;
or any combination thereof.

The present invention also relates to a process for the preparation of an aqueous composition for increasing dry strength in paper making, which composition comprises:
I) 5-25 % by weight of the composition of polymeric substances composed of a grafting base a):
   a) 15-70 % by weight of the polymeric substances of a starch and/or a starch derivative;and
      the monomers b) to e):
   b) 14-83 % by weight of the polymeric substances of acrylamide, methacrylamide or mixtures thereof
   c) 1-26 % by weight of the polymeric substances of at least one cationic or basic monofunctional vinyl monomer,
   d) 0-4 % by weight of the polymeric substances of at least one bi- or higher functional vinyl monomer,
   e) 0-13 % by weight of the polymeric substances of at least one nonionic, non-protonable or anionic monofunctional vinyl monomer, which differs from the monomers mentioned under b) and c),
   whereas the sum of a) to e) is 100 % by weight of the polymeric substances; and
II) an aluminium content of 0.1-3% by weight of the composition from at least one water soluble aluminium containing compound;
   wherein said polymeric substances are prepared by subjecting the monomers b) to e) and the grafting base a) to a free radical polymerisation in water, and the at least one water soluble aluminium containing compound is added before, during and/or after said polymerisation.

In one embodiment of the process, in a first step, at least 30% of the total amount of said at least one cationic or basic monofunctional vinyl monomer in c) are subjected to free radical polymerization in water in the presence of said starch or starch derivative a) and then, in a second step, said acrylamide, methacrylamide or mixtures thereof in b), and the remaining amount said at least one cationic or basic monofunctional vinyl monomer in c) and optionally said at least one bi- or higher functional vinyl monomer under d) and/or said at least one non-ionic, non-protonable or anionic monofunctional vinyl monomer in e) are subjected to free radical polymerization in the presence of the reaction mixture formed in the first step.

In another embodiment of the present invention said polymerisation is carried out in an inert atmosphere, preferably nitrogen atmosphere.

In yet another embodiment of the present invention said polymerisation is carried out at a pH of 1-6.5, preferably 1.5-6.

Also, said aqueous composition may be used as a dry strength agent for paper.

According to the invention there is also provided a method of imparting dry strength to paper wherein aqueous compositions according to the present invention are added to the paper stock suspensions prior to the sheet formation or are applied to the surface of the paper web.

Thus, paper which have been treated with an aqueous composition according to the present invention show increased dry strength.

However, it should be noted that the aqueous composition according to the present invention is suitable for different paper grades such as woodfree uncoated and coated paper, newsprint and magazine paper, linerboard, cartonboard and other paper grades. The mentioned paper grades typically contain the customary mineral fillers that are normally used in the paper industry.

Further features and advantages of the present invention will be more apparent from the subsequent description and the appended claims.

### Detailed description of the invention

The present invention relates to achieving increased dry strength in paper.

The composition according to the present invention comprises 5-25% by weight of the total composition, preferably 10-20% by weight, of polymeric substances as defined earlier. However, the composition further contains water and may additionally contain other components such as different types of polymers and/or additives generally known within the art as well.

The starches mentioned under a) may be starches derived from potatoes, rice, tapioca, wheat or corn, or any combination thereof. Usually, starches which have been pretreated by a molecular-weight reducing step and/or have been derivatized are preferably used according to the present invention compared to native (unmodified) starches. Typical methods to reduce the molecular weight of starch are the enzymatic treatment with amylases, the hydrolytic treatment with acids, the thermal treatment or the oxidative treatment. Examples of suitable starch derivatives according to the present invention are starch ethers, e.g hydroxyethylated starches, starch esters and cationic starches. Cationic starches are starch ethers which have been modified with side chains containing quaternary ammonium groups. Typically the cationic starches suitable for the present invention have a degree of substitution (DS) in the range of 0.05-0.70. Any combination of the starches and their derivatives could also be used.

Particularly preferable according to the present invention are starches selected from the group consisting of hydroxyethylated starches, cationic starches, and cationic starches which have been reduced in their molecular weight through an oxidative treatment, or any combination thereof. Preferably cationic starches which have been reduced in their molecular weight through an oxidative treatment are used.

The starches mentioned under a) are in an amount of 15-70 % by weight of the polymeric substances, preferably 20-55% by weight.

The reactant mentioned under b) consists of acrylamide, methacrylamide or mixtures of both monomers in any ratio. Preferably only acrylamide is used. The reactant mentioned under b) is in an amount of 14-83 % by weight of the polymeric substances, preferably 30-70% by weight.

The reactant mentioned under c) consists of at least one monofunctional vinyl compound with a radically polymerizable double bond, bearing either a permanent cationic charge in form of e.g. an ammonium group, or a basic group which is at least partially present in protonated form under weakly acidic conditions (pH 2,5-6). Examples of such vinyl compounds are N,N-dialkylaminoalkylacrylates or the respective methacrylates, or N,N-dialkylaminoalkylacrylamides or the respective methacrylamides, as well as the quaternization products of all these compounds, or any combination thereof.

Examples of suitable compounds under c) are N,N-dimethylaminoethylacrylate, N,N-dimethylaminoethylmethacrylate, N,N-diethylaminoethylacrylate, N,N-diethylaminoethylmethacrylate, N,N-dimethylaminopropylacrylamide, N,N-dimethylaminopropylmethacrylamide, as well as the corresponding ammonium salts of the aforementioned compounds, which are accessible through treatment of the aforementioned compounds with customary quaternization reagents, e.g methyl chloride, benzyl chloride, dimethyl sulphate and epichlorohydrin.

Examples of suitable quaternary compounds under c) are 2-(acryloyloxy)ethyltrimethylammoniumchloride, 2-(methacryloyloxy)ethyltrimethylammoniumchloride, 3-(acrylamido)propyl-trimethylammoniumchloride, 3-(methacrylamidopropyl)trimethyl-ammoniumchloride, 2-(acryloyloxy)ethylbenzyldimethylammoniumchloride and 2-(methacryloyloxy)ethylbenzyldimethylammoniumchloride.

Further examples of suitable vinyl monomers under c) are vinylpyridine and diallyldimethylammoniumchloride (DADMAC). Preferably vinyl monomers with a permanent cationic charge are used. Particularly preferred are 2-(acryloyloxy)ethyl-trimethylammoniumchloride, 2-(methacryloyloxy)ethyltrimethylammoniumchloride and diallyldimethylammoniumchloride.

The reactant mentioned under d) consists of at least one water-soluble compound with two or more polymerizable vinyl groups. Said water soluble compounds are considered having a water solubility of at least 3g/l at 23°C. Examples of typical compounds are monomers like N,N'-methylene-bisacrylamide, ethyleneglycoldiacrylate and ethylenglycoldimethacrylate. The amount of the monomer under d) is chosen in such a way that the resulting polymer exhibits a higher average molecular weight and thus a higher viscosity, compared to a polymer made without d), but with essentially maintained water solubility of the resulting polymer. N,N-methylenebisacrylamide is a preferred reactant under d).

The reactant mentioned under e) is chosen from nonionic, nonprotonable or anionic monofunctional vinyl compounds being different from the monomers under c). Examples of suitable non-ionic monomers are styrene, acrylic esters, methacrylic esters, acrylonitrile, methacrylonitrile, N,N-dimethylacrylamide, vinyl acetate, vinyl propionate, N-vinylformamide, hydroxyethylacrylate and hydroxyethylmethacrylate, as well as esters obtained from acrylic acid or methacrylic acid and at least two equivalents ethylene oxide. Examples of suitable anionic monomers are acrylic acid, methacrylic acid, cinnamic acid, itaconic acid, maleic anhydride, vinylsulfonic acid and styrenesulfonic acid. Preferred are the monomers N-vinylformamide, acrylic acid and styrenesulfonic acid.

The molar ratio of c) to e) is preferably chosen in such a way that the resulting polymers display either a cationic or at least neutral charge in the pH range of 4-7.

According to one embodiment, if an anionic monomer mentioned under e) is used, the amount in relation to the amount of the cationic monomer under c) is chosen so that not more than 0.66 mol of anionic monomer, based on 1 mol of cationic monomer, is used. Exclusively products having an excess cationic charge are thus obtained.

According to the present invention the composition to increase the dry strength of paper comprises at least one water soluble aluminium compound. Said soluble aluminium compound is preferably chosen from aluminium salts and/or polyaluminium salts. Suitable aluminium compounds that preferably are used may be chosen from aluminium sulphate, potassium aluminium sulphate, aluminates, aluminium nitrate, polyaluminium chloride and polyaluminium sulphate. Amongst the aluminates, sodium and/or potassium aluminates are preferred. Preferably polyaluminium chloride and/or polyaluminium sulphate are used as the aluminium containing compound. Polyaluminum chloride (PAC) is the name given to the family of compounds defined by the formula:

Alₘ(OH)ₙCl₃ₘ₋ₙ

Where 0<n≤3m and where m≥1. The degree of neutralization (i.e. the OH to Al ratio) is known as the basicity. In the case of polyaluminum chlorides the basicity is defined by the formula n/3m. It is noteworthy that high basicity polyaluminium chlorides (i.e. having a basicity value of >60%) in the composition according to the present invention lead to quick thickening and may be considered less suitable to get storage stable blends. However, stabilization against viscosity increase can be achieved by adding small amounts of phosphoric acid to the aqueous composition according to the present invention.

Amongst polyaluminium chlorides medium basicity or low basicity compounds are preferred according to the present invention. Thus, a value for the basicity of at most 60% is considered preferred and more preferably a value of at most 55%.

The polymerisation according to the present invention is usually carried out in an aqueous medium at neutral to acidic conditions, preferably in the pH range of 1-7, preferably 1.5-6.5 and more preferably 2-5. The pH value may be adjusted to a suitable value within this range prior to the start of the polymerisation by adding small amounts of mineral acids or organic acids, e.g. hydrochloric acid, sulphuric acid, phosphoric acid, acetic acid or formic acid. The total amount of starch is preferably placed in the reactor in suspended and/or dissolved form prior to the start of the radical polymerization. Preferably the starch is in dissolved form.

The aluminium containing compound may be added to the reactor before, during and/or after the radical polymerisation. Preferably the aluminium containing compound is added after the radical polymerization. The content of aluminium, i.e. the content of aluminium in ionic form, in the final composition or added to the reactor is about 0.1-3%, preferably 0.3-1.5%, by weight of the total composition.

The monomers are polymerized either in a batch process or a process with continuous monomer addition, or combinations of these two processes. The radical polymerization is carried out by adding suitable initiators to the reaction mixture and thus converting monomers to form polymeric substances.

According to the present invention the monomers under b), c), d) and/or e) are polymerized in the presence of starch a). Since the starch is present at the polymerisation of the monomers it will be at least partially grafted with monomers and during the polymerisation formed polymeric substances.

Preferably a cationic starch graft polymer is obtained and used according to the present invention.

In one embodiment of the present invention any one of the monomers under b), c), d) and/or e) are added and/or mixed with the starch. The monomers may be added in their full amounts or in parts. The added monomers may be polymerized in presence of starch in several sequential steps until the full amount of starch and monomers have been added according to the invention.

The radical polymerization according to the present invention may be performed in at least one step. If several steps are used in the polymerisation this means that the polymerisation may be performed batchwise, wherein the polymerisation is stopped between the steps. However, several steps of the polymerization is also to be interpreted to include a more continuous process wherein the polymerization continues and the different components are added sequentially during the polymerization.

In a preferred embodiment of the present invention, a part of the total amount of the monomer under c) is first polymerized, before the polymerization of the other monomers under b) and optionally d) and/or e) is started. Preferably at least 30% by weight of the monomer under c) is converted before the polymerization with reactants under b) and the remaining part under c), and optionally d) and/or e) is started. The conversion rate of the cationic monomer in c) can be determined e.g. by 1H-NMR spectroscopy.

In one embodiment of the present invention the starch is heated to a temperature above its gelatinization point prior to the polymerization. Thus, a common temperature range for carrying out the polymerization is 70-100°C. The temperature may also be higher if a pressure resistant reactor under superatmospheric pressure is employed.

A typical duration of the polymerization mentioned above for a partial conversion under c) is in the range of about 15-90 minutes. The duration of the conversion of all other remaining monomers under b), c) and optionally d) and/or e) is in the range of about 30-240 minutes.

Monomers and initiators are each added to the reaction mixture in one or several portions, or continuously during the polymerization. Preferably, but not necessarily, the polymerisation is carried out in an inert atmosphere, e.g nitrogen atmosphere.

According to one embodiment of the present invention preferred initiators for the polymerization are radical initiators, which preferably are chosen from peroxides and azo compounds. Examples of preferred radical initiators are hydrogen peroxide, sodium peroxodisulphate, potassium peroxodisulphate, ammonium peroxodisulphate, di-tert-butylperoxide, dibenzoylperoxide, 2,2'-azobis(2-methylbutyronitrile), 2,2'-azobis(2,4-dimethylvaleronitrile), azoisobutyronitrile (technical abbreviations AIBN, AZDN) and 2,2'-azobis(2-amidinopropane)dihydrochloride. More preferably are initiators with a water solubility of at least 1 % by weight at 23°C used, wherein mention can be made of hydrogen peroxide, potassium peroxodisulphate and ammonium peroxodisulphate. Any combination of the radical initators could also be used.

In another embodiment, so-called redox initiator systems may be used for carrying out the present invention. In these systems, the radical initiator is combined with a suitable reducing agent. Examples of such reducing agents are sodium sulfite, sodium pyrosulfite, sodium hydrogensulfite, sodium dithionite, sodium formaldehyde sulphoxylate and ascorbinic acid. Any combination of the reducing agents could also be used.

In another embodiment of the present invention the mentioned radical initiators are combined with suitable metal salts so that a redox initiator system is formed. Examples of suitable metal salts are cerium, manganese and iron salts, or any combination thereof.

In yet another embodiment redox initiator systems with the three above mentioned components radical initiator, metal salt and reduction agent are also possible according to the present invention.

During the entire preparation process, the reaction mixture is usually thoroughly mixed by means of suitable stirring or mixing units so that the added components are homogeneously distributed as rapidly as possible. After the end of the addition of the monomers and the initiator, the reaction mixture is usually allowed to continue reacting for some time in order to complete the polymerization. After this subsequent reaction time, a certain amount of initiator is preferably added again in order to polymerize as substantially as possible the residual monomers still present in the reaction mixture. After a further subsequent reaction time, the pH of the resulting polymer solution can be adjusted by adding suitable bases. A value in the range of 3-7 is preferably established thereby, and preferred bases are alkali metal hydroxides and alkali metal acetates. Furthermore, buffer substances may also be added in order to stabilize the pH over the storage time.

The polymer concentration, including starch, of the polymer solutions prepared according to the present invention is preferably 5-25% by weight and in particular 10-22% by weight. The viscosity of the resulting composition is preferably <5 000 mPa.s measured at 23°C by means of a rotational viscometer.

In order to increase the shelf-life of the resulting polymer solutions, a biocide may be added at the end of the preparation process in order to achieve effective protection from fungal and bacterial attack. Biocides based on isothiazolinones or benzoisothiazolinones, or formaldehyde-donating biocides, are preferably added for this purpose.

The composition according to the present invention comprising aluminium containing compounds and starch graft polymers is suitable in principle for enhancing the dry strength of all customary papers, it being possible both to use them in the pulp, i.e. to add them to the paper stock prior to sheet formation (in the paper machine wet end), and to apply them to the surface of the paper web, for example by means of a size press or film press or by spraying. It is preferred to use the aluminium containing compounds and starch graft polymers of the present invention in the wet end application.

To make it easier to understand the invention, it will be described below by way of non-limiting examples. Also, a comparative example is provided which is not according to the present invention.

All indications of percentage refer to percent by weight if not otherwise stated.

### Examples

### Preparation examples

### Example 1:

### Step 1 (polymerization):

In a 21, cylindrical-shaped flask with jacket heating, a stirrer and a nitrogen inlet; 1031,6 g of deionized water are introduced at room temperature and then 118.5 g of the starch Amylofax^{®} 15 (cationic potato starch from AVEBE; DS 0,027) are suspended therein under stirring. The starch had a dry content of 82.9%. The apparatus is then placed under nitrogen. Nitrogen atmosphere and stirring are maintained throughout the entire reaction sequence.
The starch suspension is heated up to 85 °C, whereby the starch is dissolved so that a slightly turbid, almost transparent solution forms. After reaching 85 °C, stirring is continued for 15 minutes and then the following chemicals are added subsequently
- 0.71 g of glacial acetic acid
- 0.36 g of sodium formaldehyde sulphoxylate dihydrate
- 55.3 g of 2-(acryloyloxyethyl)trimethylammoniumchloride as 80% strength aqueous solution

Then a feed solution with the polymerization initiator (feed 1) is metered in with constant metering speed over a period of 120 minutes. Another feed solution with acrylamide monomer (feed 2) is metered in with constant metering speed over a period of 90 minutes and is started 30 minutes after feed 1 has been started, so that both feeds are completed at the same time.
Feed 1: 229.2 g of a 2.0% strength aqueous solution of ammonium peroxodisulphate
Feed 2: 370.0 g of a 50% strength aqueous solution of acrylamide

After completion of these two feeds, stirring is continued for 45 minutes, and then 35.5 g of a 2.0% strength aqueous solution of ammonium peroxodisulphate are added to complete the monomer conversion. Stirring at 85 °C is then continued for another 45 minutes, and then the batch is cooled to 30 °C.

### Step 2:

The resulting polymer solution is cooled to 25 °C and then the pH is adjusted to 3.5 under stirring; using a 10% strength sodium hydroxide solution (NaOH consumption 6.2 g). Under continued stirring, 146.9 g of PAX-18^{®} (polyaluminiumchloride from Kemira) are added and stirring is continued for 10 minutes. Then 1.8 g of the biocide Preventol^{®} D 2 (Lanxess) are added. Finally the polymer solution is filtered through a 100µ polyamide filter.

A yellowish, clear, viscous and homogeneous polymer solution is obtained.

PAX-18 has an Al₂O₃ content of approx. 17% (corresponding to an Al content of approx. 9% and a basicity of 38-48%).

### Example 2:

### Step 1 (polymerization):

In a 21, cylindrical-shaped flask with jacket heating, a stirrer and a nitrogen inlet, 1091.9 g of deionized water are introduced at room temperature and then 110.4 g of the starch Amylofax^{®} 15 are suspended therein under stirring. The starch had a dry content of 82.9%. The apparatus is then placed under nitrogen. Nitrogen atmosphere and stirring are maintained throughout the entire reaction sequence.
The starch suspension is heated up to 85 °C, whereby the starch is dissolved so that a slightly turbid, almost transparent solution forms. After reaching 85 °C, stirring is continued for 15 minutes and then the following chemicals are added subsequently
- 0.66 g of glacial acetic acid
- 0.34 g of sodium formaldehyde sulphoxylate dihydrate
- 51.5 g of 2-(acryloyloxyethyl)trimethylammoniumchloride as 80% strength aqueous solution
- 1.53 g of N,N-methylene-bis-acrylamide

Stirring is continued for 10 minutes to allow for dissolution of N,N-methylene-bis-acrylamide.

Then a feed solution with the polymerization initiator (feed 1) is metered in with constant metering speed over a period of 120 minutes. Another feed solution containing acrylamide monomer and N,N-methylene-bis-acrylamide (feed 2) is metered in with constant metering speed over a period of 90 minutes and is started 30 minutes after feed 1 has been started, so that both feeds are completed at the same time.
Feed 1: 213.7 g of a 2.0% strength aqueous solution of ammonium peroxodisulphate
Feed 2: 338.0 g of an aqueous monomer solution, consisting of
   167.1 g acrylamide
   3.81 g N,N-methylene-bis-acrylamide
   167.1 g deionized water

After completion of these two feeds, stirring is continued for 45 minutes, and then 33.1 g of a 2.0% strength aqueous solution of ammonium peroxodisulphate are added to complete the monomer conversion. Stirring at 85 °C is then continued for another 45 minutes, and then the batch is cooled to 30 °C.

### Step 2:

The resulting polymer solution is cooled to 25 °C and then the pH is adjusted to 3.5 under stirring; using a 10% strength sodium hydroxide solution (NaOH consumption 4.9 g). Under continued stirring, 151.7 g of PAX-18^{®} are added and stirring is continued for 10 minutes. Then 1.8 g of the biocide Preventol^{®} D 2 are added. Finally the polymer solution is filtered through a 100µ polyamide filter.

A yellowish, clear, viscous and homogeneous polymer solution is obtained.

### Example 3:

Step 1 of example 1 is repeated. The resulting polymer solution is cooled to 25 °C and then the pH is adjusted to 3.5 under stirring; using a 10% strength sodium hydroxide solution. Under continued stirring, 22.94 g of sodium dihydrogenphosphate dihydrate are added and dissolved during 15 minutes. Then 146.9 g of PAX-18^{®} are added and stirring is continued for another 10 minutes. Then 1.8 g of the biocide Preventol^{®} D 2 are added. Finally the polymer solution is filtered through a 100µ polyamide filter.

A yellowish, clear, viscous and homogeneous polymer solution is obtained.

### Example 4:

Example 1 is repeated in analogous manner, but using a polyaluminium chloride with lower Al₂O₃ content and lower basicity. Instead of 146.9 g PAX-18^{®}, 303 g of PAX-14^{®} (polyaluminiumchloride from Kemira) are used. A yellowish, clear and homogeneous polymer solution with lower viscosity than in example 1 is obtained.

PAX-14 has an Al₂O₃ content of approx. 13.6% (corresponding to an Al content of approx. 7.2%) and a basicity of 27-33%.

### Example 5:

Example 2 is repeated with the following differences:
- instead of 151.7 PAX-18^{®}; 96.2 g of PAX-14^{®} are used

### Example 6:

### Step 1 (polymerization):

In a 21, cylindrical-shaped flask with jacket heating, a stirrer and a nitrogen inlet; 1154 g of deionized water are introduced at room temperature and then 102.3 g of the starch Amylofax^{®} 15 are suspended therein under stirring. The starch had a dry content of 81.3%. After having produced a lump-free suspension, 277.5 g of the aluminium salt KAl(SO₄)₂*12H₂O are added. The apparatus is then placed under nitrogen. Nitrogen atmosphere and stirring are maintained throughout the entire reaction sequence.

The suspension is heated up to 85 °C, whereby the starch is dissolved so that a slightly turbid, almost transparent solution forms. After reaching 85 °C, stirring is continued for 15 minutes and then the following chemicals are added subsequently
- 0.30 g of sodium formaldehyde sulphoxylate dihydrate
- 46.8 g of 2-(acryloyloxyethyl)trimethylammoniumchloride as 80% strength aqueous solution.

Then a feed solution with the polymerization initiator (feed 1) is metered in with constant metering speed over a period of 120 minutes. Another feed solution with acrylamide monomer (feed 2) is metered in with constant metering speed over a period of 90 minutes and is started 30 minutes after feed 1 has been started, so that both feeds are completed at the same time.
Feed 1: 194.2 g of a 2.0% strength aqueous solution of ammonium peroxodisulphate
Feed 2: 313.6 g of a 50% strength aqueous solution of acrylamide

After completion of these two feeds, stirring is continued for 45 minutes, and then 30.0 g of a 2.0% strength aqueous solution of ammonium peroxodisulphate are added to complete the monomer conversion. Stirring at 85 °C is then continued for another 45 minutes, and then the batch is cooled to 30 °C.

### Step 2:

The pH value is adjusted to 4.0, using a 10% strength sodium hydroxide solution. 205.5 g of the 10% strength NaOH solution are consumed for this. Then 1.8 g of the biocide Preventol^{®} D 2 are added. Finally the polymer solution is filtered through a 100µ polyamide filter.

A yellowish, moderately viscous, clear and homogeneous polymer solution is obtained.

### Example 7:

### Step 1 (polymerization):

In a 21, cylindrical-shaped flask with jacket heating, a stirrer and a nitrogen inlet; 1154 g of deionized water are introduced at room temperature and then 102.3 g of the starch Amylofax^{®} 15 are suspended therein under stirring. The starch had a dry content of 81.3%. After having produced a lump-free suspension, 175.7 g of PAX-18^{®} are added. The apparatus is then placed under nitrogen. Nitrogen atmosphere and stirring are maintained throughout the entire reaction sequence.
The suspension is heated up to 85 °C, whereby the starch is dissolved so that a slightly turbid, almost transparent solution forms. After reaching 85 °C, stirring is continued for 15 minutes and then the following chemicals are added subsequently
- 0.6 g of glacial acetic acid
- 0.30 g of sodium formaldehyde sulphoxylate dihydrate
- 46.8 g of 2-(acryloyloxyethyl)trimethylammoniumchloride as 80% strength aqueous solution

Then a feed solution with the polymerization initiator (feed 1) is metered in with constant metering speed over a period of 120 minutes. Another feed solution with acrylamide monomer (feed 2) is metered in with constant metering speed over a period of 90 minutes and is started 30 minutes after feed 1 has been started, so that both feeds are completed at the same time.
Feed 1: 194.2 g of a 2.0% strength aqueous solution of ammonium peroxodisulphate
Feed 2: 313.6 g of a 50% strength aqueous solution of acrylamide

After completion of these two feeds, stirring is continued for 45 minutes, and then 30.0 g of a 2.0% strength aqueous solution of ammonium peroxodisulphate are added to complete the monomer conversion. Stirring at 85 °C is then continued for another 45 minutes, and then the batch is cooled to 30 °C.

### Step 2:

The pH value is adjusted to 4.0, using a 10% strength sodium hydroxide solution. 122.1 g of the 10% strength NaOH solution are consumed for this. Then 1.8 g of the biocide Preventol^{®} D 2 are added. Finally the polymer solution is filtered through a 100µ polyamide filter.

A yellowish, moderately viscous, clear and homogeneous polymer solution is obtained.

### Comparative example 1:

Example 1 of EP 1452552 is repeated, using the starch Perlsize K 98 L^{®} (Lyckeby Starkelsen). The pH is in the end adjusted to 4.5 instead of 7.0 - as mentioned in EP 1452552- using a 10% strength aqueous NaOH solution.

The below table lists the physical parameters of the polymer solutions according to the above described examples:

**Table 1: Physical parameters of the polymer solutions according to the preparation examples and comparative examples**

| Example | pH value | Dry content (%) | Dynamic viscosity at 23 °C (mPas) | Polymeric solids (starch+polyacrylamide) [%] |
|---|---|---|---|---|
| 1 | 3.1 | 18.6 | 1280 | 16.4 |
| 2 | 3.1 | 17.3 | 3460 | 15.2 |
| 3 | 3.2 | 19.2 | 1120 | 16.2 |
| 4 | 2.8 | 20.1 | 530 | 15.2 |
| 5 | 3.0 | 16.5 | 500 | 15.6 |
| 6 | 4.0 | 20.1 | 250 | 11.9 |
| 7 | 4.0 | 15.9 | 24300 | 13.0 |
| Comparative | | | | |
| 1 | 4.5 | 10.2 | 360 | 10.0 |

Dynamic viscosity values were determined using the viscosimeter Haake VT 5L (Spindle L3; 23 °C).
Dry content values were determined using a Mettler HR 73 halogen dryer; drying conditions: 150 °C, 20 minutes.

### Use examples:

A papermaking furnish was produced by repulping lining board based on 100% recovered paper (OCC). The repulping was done using fresh water with a hardness of 5 °dH. The furnish had a total ash content of 14.3%. Repulping was done at a consistency of approx. 2.6%, then the furnish was diluted with water to a consistency of 0.5%. To equal parts of this suspension, the polymers of the above examples were added under stirring on a magnetic stirrer, the addition rate of polymeric solids related to dry furnish being 0.2% and 0.4%, respectively. Stirring was continued for another 3 minutes, then handsheets were formed on a Rapid-Koethen lab sheet former. The sheets were first dried for 7 minutes at 95 °C in the connected drier, and then post dried in the oven for 10 minutes at 110 °C. After this, the handsheets were stored for 24 hours at 23 °C and 50% relative humidity. The ash content of the so formed handsheets was in the range of 9.0-10.5%, determined in an ash oven at 520 °C. The basis weight values of the formed sheets are listed in the table below.

The sheets were then evaluated for their dry strength properties, dry tensile strength was determined with a device of the company Frank and burst strength with a device of the company Lorentzen&Wettre. The dry tensile strength is expressed in the below table as breaking power in N. From the obtained values for the breaking power and the burst strength, the breaking power index and the burst strength index were calculated using the basis weight of the individual sheets (see table below). Those values can be directly compared.

**Table 2: Dry strength properties of handsheets, treated with the polymer solutions of the above examples**

| Example | Added amount (%) | Sheet basis weight (g/m²) | Breaking power (N) | Breaking power index (N*m²/g) | Burst strength (kPa) | Burst strength index (kPa*m²/g) |
|---|---|---|---|---|---|---|
| 1 | 0.2 | 81.0 | 49.3 | 0.609 | 180.5 | 2.23 |
| | 0.4 | 82.1 | 54.3 | 0.661 | 202.3 | 2.46 |
| 2 | 0.2 | 81.1 | 52.0 | 0.641 | 185.9 | 2.29 |
| | 0.4 | 80.3 | 55.8 | 0.695 | 205.0 | 2.55 |
| 3 | 0.2 | 79.7 | 51.5 | 0.646 | 182.0 | 2.28 |
| | 0.4 | 81.5 | 54.7 | 0.671 | 197.8 | 2.43 |
| 4 | 0.2 | 82.9 | 51.9 | 0.626 | 173.0 | 2.09 |
| | 0.4 | 81.8 | 55.6 | 0.680 | 196.2 | 2.40 |
| 5 | 0.2 | 78.8 | 51.4 | 0.652 | 179.7 | 2.28 |
| | 0.4 | 82.3 | 53.0 | 0.644 | 191.1 | 2.32 |
| 6 | 0.2 | 80.2 | 49.6 | 0.618 | 175.4 | 2.19 |
| | 0.4 | 79.7 | 52.1 | 0.654 | 195.6 | 2.45 |
| 7 | 0.2 | 81.5 | 52.9 | 0.649 | 183.6 | 2.25 |
| | 0.4 | 81.0 | 55.4 | 0.684 | 201.4 | 2.49 |
| Comparative | | | | | | |
| 1 | 0.2 | 79.9 | 47.7 | 0.597 | 164.1 | 2.05 |
| | 0.4 | 82.4 | 52.0 | 0.631 | 187.8 | 2.28 |

The use of the aluminium containing compounds in the examples 1-7 leads to improved dry strengthening properties, as compared to the aluminium-free polymer solution according to the state-of-the-art (comparative example 1).

## Claims

1. An aqueous composition for increasing dry strength in paper making **characterized in that** said composition comprises:
I) 5-25 % by weight of the composition of polymeric substances composed of a grafting base a):
a) 15-70 % by weight of the polymeric substances of a starch and/or a starch derivative; and
monomers b) to e):
b) 14-83 % by weight of the polymeric substances of acrylamide, methacrylamide or mixtures thereof
c) 1-26 % by weight of the polymeric substances of at least one cationic or basic monofunctional vinyl monomer,
d) 0-4 % by weight of the polymeric substances of at least one bi- or higher functional vinyl monomer,
e) 0-13 % by weight of the polymeric substances of at least one nonionic, non-protonable or anionic monofunctional vinyl monomer, which differs from the monomers mentioned under c),
whereas the sum of a) to e) is 100 % by weight of the polymeric substances;
and
II) an aluminium content of 0.1-3% by weight of the composition from at least one water soluble aluminium containing compound.

2. An aqueous composition according to claim 1, wherein said aluminium containing compounds are aluminium salts and/or polyaluminium salts; preferably chosen from aluminium sulphate, potassium aluminium sulphate, aluminates, aluminium nitrate, polyaluminium chloride and polyaluminium sulphate or any combination thereof.

3. An aqueous composition according to any of claim 1 or 2, wherein said starches have been pretreated by a molecular-weight reducing step and/or have been derivatized; preferably chosen from hydroxyethylated starches, cationic starches, and cationic starches which have been reduced in their molecular weight through an oxidative treatment.

4. An aqueous composition according to any of claims 1-3, wherein said monomer under b) is acrylamide.

5. An aqueous composition according to any of claims 1-3, wherein said monomer under c) is chosen from the group consisiting of N,N-dialkylaminoalkylacrylates or the respective methacrylates, or N,N-dialkylaminoalkylacrylamides or the respective methacrylamides, as well as the quaternization products of all these compounds, or any combination thereof.

6. An aqueous composition according to any of claims 1-3, wherein said monomer under d) is chosen from the group consisiting of N,N'-methylene-bis-acrylamide, ethyleneglycoldiacrylate and ethylenglycoldimethacrylate, or any combination thereof.

7. An aqueous composition according to any of claims 1-3, wherein if said monomer under e) is:
- a nonionic monomer it is chosen from the group consisiting of styrene, acrylic esters, methacrylic esters, acrylonitrile, methacrylonitrile, N,N-dimethylacrylamide, vinyl acetate, vinyl propionate, N-vinylformamide, hydroxyethylacrylate and hydroxyethylmethacrylate, as well as esters obtained from acrylic acid or methacrylic acid and at least two equivalents ethylene oxide or any combination thereof; or
- an anionic monomer it is chosen from the group consisting of acrylic acid, methacrylic acid, itaconic acid, maleic anhydride, vinylsulfonic acid and styrenesulfonic acid or any combination thereof;
or any combination thereof.

8. A process for the preparation of an aqueous composition for increasing dry strength in paper making, which composition comprises:
I) 5-25 % by weight of the composition of polymeric substances composed of a grafting base a):
a) 15-70 % by weight of the polymeric substances of a starch and/or a starch derivative;and
the monomers b) to e):
b) 14-83 % by weight of the polymeric substances of acrylamide, methacrylamide or mixtures thereof
c) 1-26 % by weight of the polymeric substances of at least one cationic or basic monofunctional vinyl monomer,
d) 0-4 % by weight of the polymeric substances of at least one bi- or higher functional vinyl monomer,
e) 0-13 % by weight of the polymeric substances of at least one nonionic, non-protonable or anionic monofunctional vinyl monomer, which differs from the monomers mentioned under c),
whereas the sum of a) to e) is 100 % by weight of the polymeric substances; and
II) an aluminium content of 0.1-3% by weight of the composition from at least one water soluble aluminium containing compound;
wherein said polymeric substances are prepared by subjecting the monomers b) to e) and the grafting base a) to a free radical polymerisation in water, and the at least one water soluble aluminium containing compound is added before, during and/or after said polymerisation.

9. A process according to claim 8, wherein,
in a first step, at least 30% of the total amount of said at least one cationic or basic monofunctional vinyl monomer in c) are subjected to free radical polymerization in water in the presence of said starch or starch derivative a) and then,
in a second step, said acrylamide, methacrylamide or mixtures thereof in b), and the remaining amount said at least one cationic or basic monofunctional vinyl monomer in c) and optionally said at least one bi- or higher functional vinyl monomer under d) and/or said at least one non-ionic, non-protonable or anionic monofunctional vinyl monomer in e) are subjected to free radical polymerization in the presence of the reaction mixture formed in the first step.

10. A process according to claim 8 or 9, wherein said polymerisation is carried out in an inert atmosphere, preferably nitrogen atmosphere.

11. A process according to any of claims 1-3, wherein said polymerisation is carried out at a pH of 1-7, preferably pH 1.5-6.5, and more preferably pH 2-5.

12. Use of an aqueous composition according to any one of claims 1-7 as a dry strength agent for paper.

13. Method of imparting dry strength to paper **characterized in that** aqueous compositions according to claim 1-7 are added to the paper stock suspensions prior to the sheet formation or are applied to the surface of the paper web.

14. Paper treated with an aqueous composition according to any one of claims 1-7.
